**Europäisches Patentamt**

**European Patent Office**

**Office européen des brevets**

(19)

(11) Veröffentlichungsnummer: **0 192 789**
**B1**

(12) # EUROPÄISCHE PATENTSCHRIFT

(45) Veröffentlichungstag der Patentschrift:
21.06.89

(51) Int. Cl.⁴: **G 01 M 1/04,** F 16 C 27/00

(21) Anmeldenummer: **85102119.6**

(22) Anmeldetag: **27.02.85**

(54) **Federnde Abstützung eines Lagers eines Rotors beim Auswuchten.**

(43) Veröffentlichungstag der Anmeldung:
03.09.86 Patentblatt 86/36

(45) Bekanntmachung des Hinweises auf die Patenterteilung:
21.06.89 Patentblatt 89/25

(84) Benannte Vertragsstaaten:
DE FR GB IT

(56) Entgegenhaltungen:
DE-A-2 453 292
DE-A-2 727 060
DE-A-2 854 838
DE-C-938 338

(73) Patentinhaber: **CARL SCHENCK AG,
Landwehrstrasse 55 Postfach 40 18, D-6100
Darmstadt (DE)**

(72) Erfinder: **Thelen, Dieter, Dr.- Ing., Am Sandrain 23,
D-6101 Modautal 3 (DE)**

(74) Vertreter: **Brandt, Ernst- Ulrich, Fa. Carl Schenck
AG Patentabteilung Landwehrstrasse 55
Postfach 40 18, D-6100 Darmstadt 1 (DE)**

**Beschreibung**

Die Erfindung betrifft eine federnde Abstützung eines Lagers nach dem Oberbegriff des Patentanspruchs 1.

Durch die DE-B-938 338 ist eine Lagerung, insbesondere Prüfkörperlagerung, für Auswuchtmaschinen mit einem oder mehreren das Aufnahmelager tragenden Wälzlagern bekannt geworden, die sich durch die federnde Abstützung dieser Wälzlager auszeichnet. Mit einer derartigen Einrichtung ist es möglich, daß sich die Lagerung den Auslenkungen des Rotors anpaßt. Wegen der Drehbeweglichkeit des Lagers um die Hoch- und Querachse müssen im Hinblick auf die Federsteifigkeit und im Hinblick darauf, daß keine die Messung verfälschenden Rückstellkräfte auftreten, Bedingungen erfüllt werden, die zu einer aufwendigen Konstruktion führen; die Gleitreibung wird jedoch nicht beseitigt. Auch ist der Platzbedarf für eine derartige Lagerung im Hinblick auf die Bauhöhe beachtlich.

Ausgehend hiervon liegt der Erfindung die Aufgabe zugrunde, eine federnde Abstützung eines Lagers in Vorschlag zu bringen, wobei ein minimaler Platzbedarf in der Höhe erforderlich ist und wobei gleichzeitig unzulässig hohe Zwangskräfte, Federrückstellkräfte und Reibungskräfte vermieden werden, insbesondere dann, wenn der auf Unwucht zu untersuchende Körper Lagerzapfen besitzt, deren Achse nicht mit der Rotationsachse des Körpers fluchten.

Ausgehend von einer federnden Abstützung eines Lagers auf einem, die Unwuchtinformation an einen Schwingungsumformer weitergebenden Teil eines Lagerständers (Dynamometer) für einen auf einer Auswuchtmaschine auf Unwucht zu untersuchenden Rotor, dessen Wellenzapfenachse nicht mit der Rotationsachse des Rotors fluchtet, wird mit den kennzeichnenden Merkmalen des Anspruchs 1 die der Erfindung zugrundeliegende Aufgabe gelöst. Durch Vermeidung der Coulomb'schen Reibung bei der Drehung des Lagers infolge zugelassener Bewegung des Lagerzapfens um die Hoch-, Querachse treten praktisch keine verfälschenden Rückstellkräfte auf. Die Federanordnung zwichen dem Dynamometerteil der Auswuchtmaschine und dem Rotorzapfen tragenden Lager der Auswuchtmaschine erlaubt eine Bewegung um die Hochachse und um die Querachse mit vernachlässigbarem Zwang, ohne daß sich diese Bewegungen praktisch gegenseitig beeinflussen. Durch die in Richtung der Querachse angeordneten Stützelemente wird das gesamte Gewicht der federnd abgestützten Lagerung und das anteilige Rotorgewicht auf den Unterbau der Auswuchtmaschine übertragen, ohne daß falschende Einflüsse in die Messung eingehen.

Eine Ausgestaltung gemäß Anspruch 2 der vorliegenden Erfindung sieht hydrostatische Lagerungen als Stützelemente vor, durch die die Coulomb'sche Reibung vermieden wird.

Bei einer Ausgestaltung nach Anspruch 3 werden Kegelrollen als Stützelemente verwendet, die auf kegeligen Gegenflächen abrollen.

Eine Ausgestaltung gemäß Anspruch 4 besteht darin, das federnd abzustützende Lager für den auszuwuchtenden Körper auf einer steifen Platte anzuordnen und diese steife Platte mittels erfindungsgemäßer Federanordnung mit dem Teil der Auswuchtmaschine zu verbinden (dynamometrischer Teil), an dem die Schwingungsumformer angreifen. Bei den Schwingungsumformern kann es sich um kraft-, weg-, geschwindigkeit- oder beschleunigungmessende Umformer handeln.

Anspruch 5 stellt eine Ausgestaltung des Erfindungsgegenstandes unter Schutz, bei der Kegel rollen sich in der vertikalen Lagermittelebene befinden und ihre Achsen in horizontal er Richtung verlaufen.

Mit Anspruch 6 wird eine federnde Abstützung unter Schutz gestellt, die sich durch ihre Kompaktbauweise und Einstückigkeit der Abstützung selbst auszeichnet.

Anspruch 7 begehrt Schutz für eine einstückige Ausführung der erfindungsgemäßen Elemente, Führungsstab und Kegel.

Die Ansprüche 8 und betreffen erfinderische Ausgestaltungen der Federspeichen, um eine rückwirkungsarme Bewegung des Lagers, die durch die nicht fluchtenden Lagerzapfenachsen hervorgerufen wird, zu ermöglichen.

Um die Steifigkeit der das Lager abstützenden Platte zu erhöhen, wird gemäß Anspruch 10 eine zusätzlichen mit der Platte verbundene Schürze vorgesehen.

Zur Erhöhung der Meßgenauigkeit wird im Kennzeichen des Anspruchs 11 eine Verschweißung zwischen Lager und Platte vorgesehen. Hiermit werden die Reibeffekte, die bei einer Schraubenverbindung auftreten, vermieden. In Anspruch 12 wird als eine besondere Ausgestaltung des Erfindungsgegenstandes die Einstückigkeit der kompletten Federanordnung, also einschließlich Führungsstab und Kegel bzw. bei Verwendung einer hydrostatischen Lagerung, die Einstückigkeit auch der Deckplatte zusammen mit der Federanordnung unter Schutz gestellt.

Um die Übertragung der vom Rotor ausgehenden Unwuchtwirkungen ohne Verfälschung durch eine Schiefstellung der Zapfenachse zur Rotorachse, zu ermöglichen, wird gemäß Kennzeichen des Anspruchs 13 Platte, Federanordnung und Dynamometerteil der Auswuchtmaschine einstückig ausgebildet.

Anspruch 14 zeigt eine bevorzugte Anordnung einer hydrostatischen Lagerung einschließlich Druckerhöhungspumpe zwischen Dynamometerteil und Spannplatte.

Mit einer Auswuchtmaschine, die erfindungsgemäß federnde Abstützungen pro Lager für den zu untersuchenden Rotor aufweist, also im allgemeinen zwei Lager pro Rotor, lassen sich insbesondere Rotoren praktisch fehlerfrei auf ihren Unwuchtzustand untersuchen, bei denen die Gefahr der windschiefen Versetzung der Lagerzapfen gegenüber der Rotorachse gegeben ist.

In der nachfolgenden Zeichnung wird die Erfindung näher erläutert.

Es zeigen:

Fig. 1     eine Ansicht eines Lagerständers einer Auswuchtmaschine mit erfindungsgemäßer federnder Abstützung eines Lagers für einen zu untersuchenden Rotor

Fig. 2     eine Seitenansicht des Lagerständers nach Fig. 1

Fig. 3     eine Draufsicht einer bevorzugten Ausgestaltung der erfindungsgemäßen federnden Abstützung

Fig. 3a     eine Ansicht der Ausgestaltung nach Fig. 3

Fig. 4     eine Anordnung von hydrostatischen Lagern als Stützelement.

In den Figuren werden gleiche Bauteile mit denselben Bezugsziffern bezeichnet.

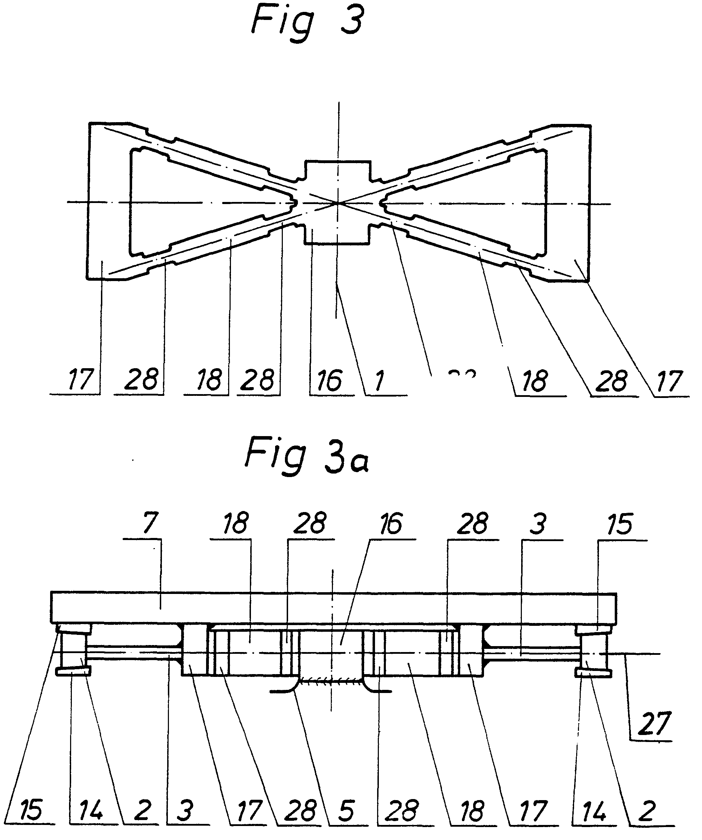

In einem Fundament 9 befinden sich ein Lagerständer 10 einer Auswuchtmaschine, der mit seinem, die Unwuchtinformationen weitergebenden Teil (Dynamometer) 5 feststellbar mit dem Fundament 9 mittels Schrauben verbunden werden kann. Zur Anpassung an verschiedene Rotoren sind die Lagerständer 10 auf dem Fundament 9 über Geradführungen 11 mit Hilfe eines Antriebs 12 gegeneinander bewegbar. Auf dem Dynamometer stützt sich nunmehr über eine Federanordnung 1 (vgl. hierzu auch Fig. 3) und über sich in Querrichtung erstreckende Kegelrollen 2 als Stützelemente das Oberteil des Lagerständers 10 mit einer Spannplatte 7 ab. Auf der Spannplatte 7 ist im Ausführungsbeispiel schematisch ein Gleitlager 13 angebracht und mit der Spannplatte 7 verschraubt. Das Gleitlager 13 dient zur Aufnahme des im allgemeinen mit Richtungsfehlern behafteten Lagerzapfens des zu untersuchenden, nicht dargestellten Rotors.

Es ist jedoch auch möglich, anstelle der Spannplatte das Unterteil des Gleitlagers 13 direkt mit der Federanordnung 1 zu verbinden. Die Kegelrollen 2 sind über Führungsstäbe 3 mit der Federanordnung 1 verbunden. Die Kegelrollen 2 sind zwischen kegeligen Abstützungen 14, 15, die auf dem Dynamometerteil 5 und dem Spannplattenteil 7 angeordnet sind, gelagert, wobei sich die Kegelspitze der Kegelrollen 2 und der kegeligen Abstützungen 14, 15 in der Hochachse Z befinden.

Die federnde Anordnung 1 ist mit ihrem Zentralbereich 16 mit dem Dynamometer 5, gemäß Ausführungsbeispiel, verschraubt; diese Verbindung kann jedoch auch durch Verschweißen hergestellt werden. Die äußeren Enden 17 der federnden Anordnung 1 sind mit der Spannplatte 7 gemäß Ausführungsbeispiel fest verbunden. Es ist jedoch auch eine Umkehrung der Verbindung möglich, dergestalt, daß der Zentralbereich 16 mit der Spannplatte 7 und die äußeren Enden 17 mit dem Dynamometerteil 5 verbunden sind. Auch hier kann anstelle der Verschraubung ein Verschweißen treten. Zwischen dem Zentralbereich 16 und den äußeren Enden 17 der federnden Anordnung erstrecken sich Speichen 18, die bevorzugt einstückig mit dem Zentralbereich und den äußeren Enden 17 hergestellt sind. Durch das Einschnüren der Speichen 18 werden auftretende minimale Rückstellkräfte noch verringert.

Tritt nunmehr eine Bewegung des Lagers 13, bei dem anstelle des im Ausführungsbeispiel dargestellten Gleitlagers auch ein Rollenlager oder ähnliches treten kann, auf, hervorgerufen durch den mit einem Richtungsfehler zur Rotationsachse an geordneten Lagerzapfen, würde bei einer nicht federnden Abstützung durch den Umlauf des Zapfens eine zusätzliche Scheinunwucht auf das Dynamometer 5 übertragen werden. Zufolge der erfindungsgemäßen Federanordnung 1 kann sich jedoch das Lager der mechanischen Ungenauigkeit um die Hochachse Z des Lagerständers und die Querachse Y des Lagerständers 10 anpassen, so daß praktisch keine verfälschenden Zusatzkräfte oder Zusatzmomente auf das Dynamometer 5 übertragen werden. Über die Kegelrollen 2 wird das Gewicht des Lagers 13 und das anteilige Gewicht des Rotors selbst, das auf diesen Lagerständer entfällt, auf das Fundament übertragen.

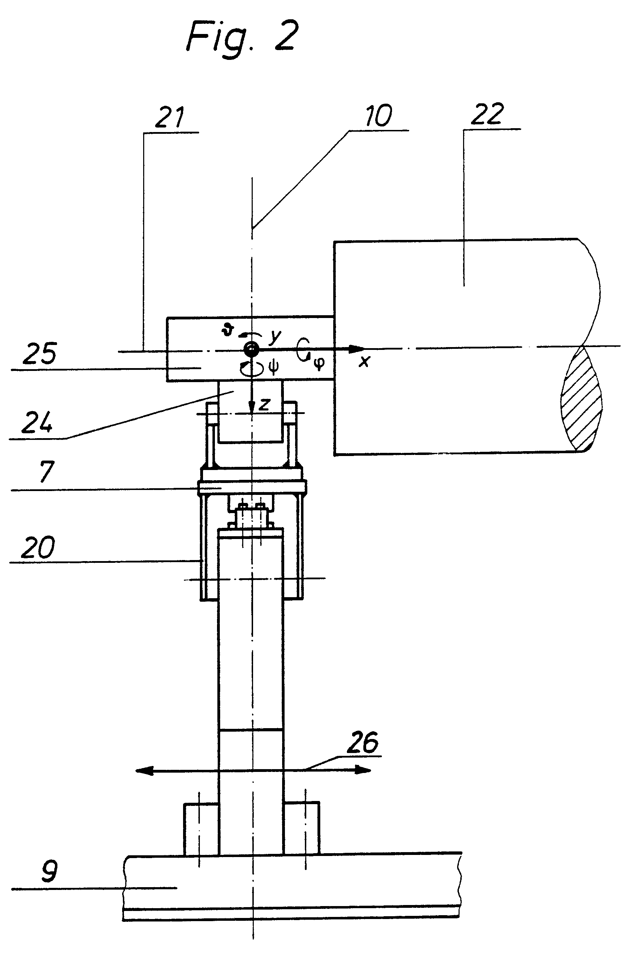

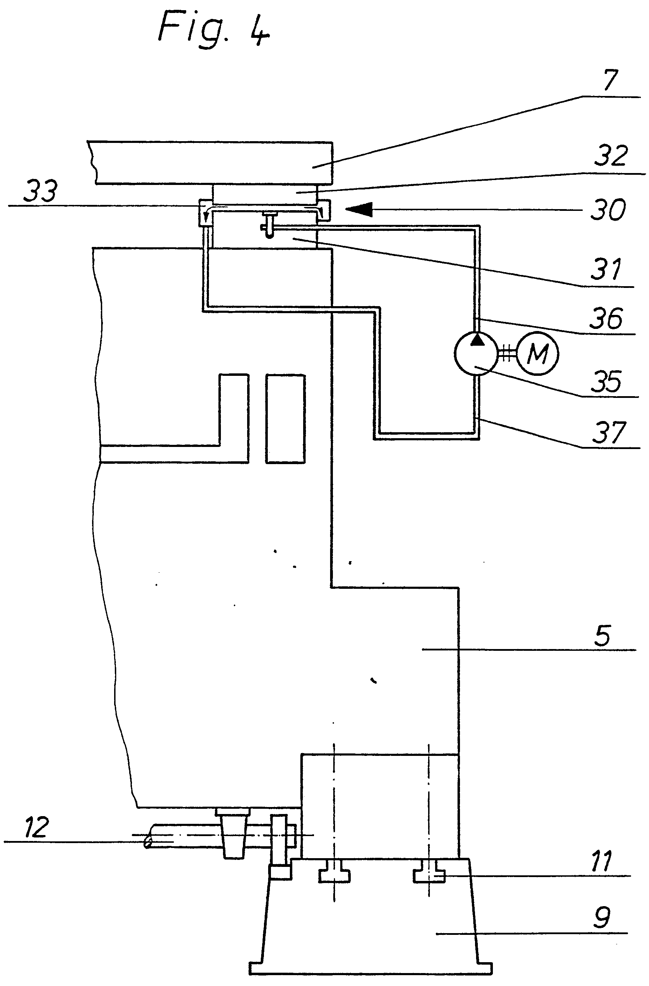

Zur Versteifung der Spannplatte 7 sind Schürzen 4 vorgesehen. Diese Schürzen 4 sind bevorzugt mit der Spannplatte 7 verschweißt (vgl. Fig. 2) und dienen ferner zum Schutz der erfindungsgemäßen Federanordnung 1 und den mit dieser verbundenen Kegelrollen 2 einschließlich Führungsstäbe 3. Die Kegelrollen 2, die in den kegeligen Abstützungen 14, 15, links und rechts der Hochachse mit ihren Achsen horizontal angeordnet sind, nehmen die Bewegung um die Hochachse auf und übertragen das Gewicht des Lagers und das anteilige Rotorgewicht auf das Fundament 9. Werden anstelle der Kegelrollen 2 die in Fig. 4 dargestellten hydrostatischen Lager 30 verwendet, dienen die Schürzen 4 ebenfalls zum Schutze dieser Lagerungen.

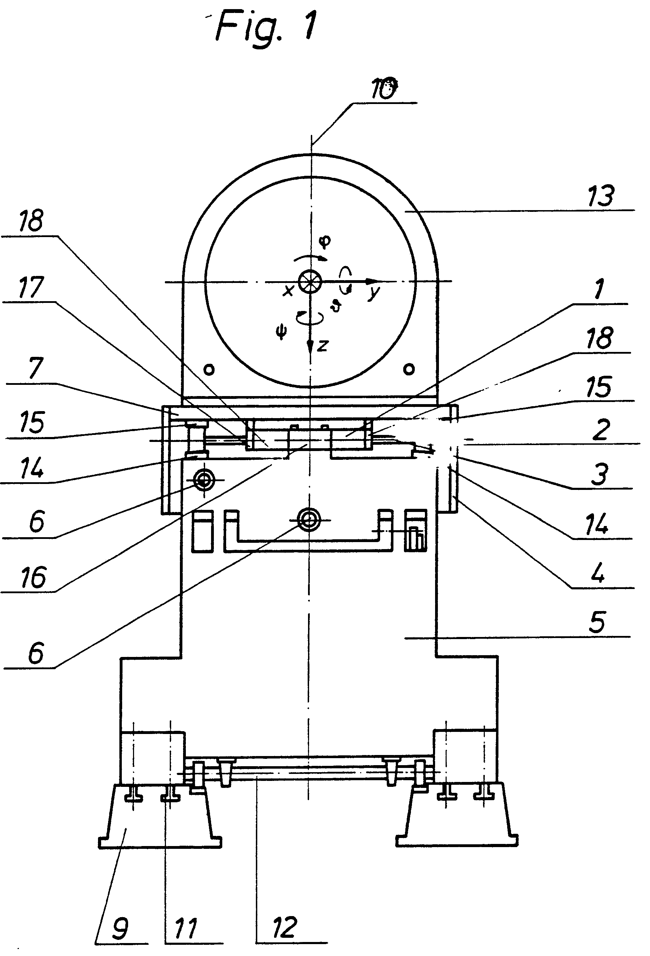

Die in Fig. 2 dargestellte Seitenansicht des Lagerständers 10 gemäß Fig. 1 zeigt, daß ein paar weitere Schürzen 20 quer zur Rotationsachse 21 eines zu untersuchenden Rotors 22 an der Spannplatte 7 angeordnet sind. Die Schürzen 20 und 4 sind an ihren Stoßstellen miteinander verschweißt.

In Fig. 2 ist anstelle des Gleitlagers eine Rollenlagerung 24 vorgesehen, auf der sich einer der beiden Lagerzapfen 25 des Rotors 22 abstützt, deren Achsen mit einem Richtungsfehler zu der Rotationsachse 21 des Rotors 22 behaftet sind. Der Übersichtlichkeit halber wurde nur ein Lagerständer 10 mit dem Zapfen 25 dargestellt.

Der Lagerständer 10 läßt sich, wie in Fig. 1 bereits beschrieben, auf dem Fundament 9 mit Hilfe der Geradführungen und des Antriebs 12 in die in Fig. 2 durch einen Doppelpfeil 26 angegebenen Richtungen bewegen.

In Fig. 3 ist die Federanordnung 1 in Draufsicht dargestellt. Vom Zentralbereich 16 erstrecken sich im wesentlichen in horizontaler Richtung Speichen 18 bis zu äußeren Enden 17 und sind dort mit den äußeren Enden 17 bevorzugt einstückig hergestellt. Hierbei wird die Federanordnung 1 in einfachster Weise aus einem Blech ausgebrannt; in diesem Falle besitzen Zentralbereich 16, die Speichen 18 und die äußeren Enden 17 gleiche Dicke in vertikaler Richtung, hingegen kann die Dicke dieser Teile in horizontaler Richtung beliebig auf den Anwendungszweck abgestimmt werden, so daß beispielsweise um die Hochachsen hervorgerufene Drehbewegungen durch den Richtungsfehler der Achse des Lagerzapfens 25 praktisch rückwirkungsfrei aufgenommen werden können, ohne fälschend in das Unwuchtmeßergebnis einzugehen, hierbei sind Einschnürungen in Speichen 18 insbesondere von Vorteil.

Anstelle des Ausbrennens der Federanordnung 1 aus einem Blech ist auch eine gegossene Ausführung denkbar, bei der der Zentralbereich 16 und die äußeren Enden 17 sowohl in Vertikalals auch in horizontaler Richtung dicker als die Speichen 18 sind. In Fig. 3a, einer Ansicht der Federanordnung 1, erstrecken sich die dünneren Speichen 18 symmetrisch zur Mittelebene 27 der Federanordnung 1. In dieser Figur sind, ebenso wie in Fig. 3, Einschnürungen 28 vorgesehen, um Rückwirkungen, die aus einer Verdrehung des Lagers um die Hochachse Z und die Querachse Y zufolge der Richtungsfehler des Lagerzapfens entstehen, zu verringern unter gleichzeitiger Aufrechterhaltung einer hohen Steifigkeit des Lagerständers in Y-, X- und Z-Richtung, wobei die X-Richtung die Rotationsachse darstellt, da die Unwuchtkraft, die axiale Kraft am Rotor und das Rotorgewicht durch die Lagerständer aufgenommen werden müssen.

Die Fig. 3 und 3a zeigten auch wie eine einstückige Herstellbarkeit der Federanordnung einschließlich Spannplatte 7 und Dynamometer 5 durch Schweißen, oder auch Gießen, erreicht werden kann. In diesem Falle sei angenommen, daß die äußere Bereiche 17 mit der Spannplatte 7 verschweißt sind, wobei der Zentralbereich 16 oberhalb der Mittelebene 27 eine geringere vertikale Höhe besitzt, währenddem der zentrale Bereich 16 unterhalb der Mittelebene 27 direkt mit einer Erhöhung des Dynamometers verschweißt ist. In diesem Falle sind die Führungsstäbe 3, die bereits mit Kegelrollen 2 versehen sind, ebenfalls mit den äußeren Enden 17 der Federanordnung 1 verschweißt.

Fig. 4 zeigt eine hydrostatische Lagerung 30, die anstelle der Kegelrollen 2, der Führungsstäbe 3 und der kegeligen Abstützungen 14, 15 tritt. Hierbei tritt durch eine gelochte Bodenplatte 31 Fluid (flüssig oder gasförmig) unter Druck gegen eine Deckplatte 32 aus. Die Bodenplatte 31 ist am Dynamometer 5 und die Deckplatte 32 an der Spannplatte 7 befestigt; statt der Bodenplatte 31 kann die Deckplatte 32 mit der Zuführbohrung für das Fluid versehen werden. Das unter Druck austretende Fluid hebt die Deckplatte 32 einschließlich Spannplatte 7 von der Bodenplatte 31 ab, so daß zwischen Bodenplatte 31 und Deckplatte 32 ein Fluidfilm 33 entsteht. Auf diesem Fluidfilm 33 kann sich die Spannplatte 7 ohne Behinderung in X-, Y- und Z-Richtung zufolge Einwirkungen durch die Richtungsfehler der Lagerzapfen bewegen, ohne daß Coulomb'sche Reibung an dieser Übergangsstelle auftritt. Gleichzeitig wird über den Fluidfilm 33 das anteilige Rotorgewicht und das gesamte Gewicht der federnd abgestützten Lagerung auf den Unterbau der Auswuchtmaschine übertragen.

Eine Druckerhöhungspumpe 35 bringt über Zuleitungen 36 das Fluid zur gelochten Bodenplatte und über Rückleitungen 37 den ablaufenden Fluidfilm 33 zurück zur Druckerhöhungspumpe 35. Es ist verständlich, daß pro Lagerständer 10 zwei hydrostatische Lagerungen 30 gemäß Fig. 4 verwendet werden; es liegt nach der erfinderischen Erkenntnis, eine hydrostatische Lagerung zu verwenden, im Ermessen des Fachmannes, für jede Lagerung eine oder mehrere Druckerhöhungspumpen zu verwenden.

## Patentansprüche

1. Federnde Abstützung eines Lagers auf einem, die Unwuchtinformationen an einen Schwingungsumformer weitergebenden Teil eines Lagerstanders für einen auf einer Auswuchtmaschine auf Unwucht zu untersuchenden Rotor, dessen Wellenzapfenachse nicht mit der Rotationsachse des Rotors fluchtet, dadurch gekennzeichnet, daß eine Drehung um die Hochachse (Z) und Querachse (Y) des Lagers (10) zulassende Federanordnung (1) zwischen dem Lager (13) für den Wellenzapfen (25) und dem die Unwuchtinformation weitergebenden Teil des Lagerständers, Dynamometer, (5) angeordnet ist, zur Unterbindung von vom Wellenzapfen (25) herrührenden Fremdschwingungen, daß zwei Stützelemente (2 bzw. 30) zwischen dem Lager (13) für den Wellenzapfen (25) und dem die Unwuchtinformation weitergebenden Teil des Lagerständers, Dynamometer, (5) in Querrichtung angeordnet sind, zur Übertragung des Rotor- und Lagergewichts auf den Lagerständer (10).

2. Federnde Abstützung nach Anspruch 1, dadurch gekennzeichnet, daß hydrostatische Lagerungen (30) die Stützelemente bilden.

3. Federnde Abstützung nach Anspruch 1, dadurch gekennzeichnet, das als Stützelement Kegelrollen (2) verwendet werden, die zwischen in Querrichtung angeordneten, kegeligen Gegenflächen (14, 15) angeordnet sind und daß die Kegelrollen (2) über Führungsstäbe (3) mit der Federanordnung (1) verbunden sind und daß die Spitzen des Kegels der Kegelrollen (2) und der kegeligen Abstützungen (14, 15) sich in der Verlängerung der vertikalen Achse (Z) des Lagers schneiden.

4. Federnde Abstützung nach Anspruch 1 und/oder 3, dadurch gekennzeichnet, daß das Lager (13) auf einer steifen Platte (7) angeordnet ist und daß die eine Drehung zulassende Federanordnung (1) einerseits mit dieser Platte (7) verbunden ist und andererseits mit dem die Unwuchtinformation weitergebenden Teil, Dynamometer, (5) des Lagerständers (10) verbunden ist und daß die Kegelrollen (2) zwischen den kegeligen Abstützungen (14, 15) an der Platte (7) und am Lagerständer (10) angeordnet sind.

5. Federnde Abstützung nach einem oder mehreren der Ansprüche 1, 3 und 4, dadurch gekennzeichnet, daß die beiden Kegelrollen (2) sich in der vertikalen Lagermittenebene (Y) erstrecken und mit ihrer Achse in horizontaler Richtung verlaufen.

6. Federnde Abstützung nach einem oder mehreren der Ansprüche 1, 3, 4 und 5, dadurch gekennzeichnet, daß die sich im wesentlichen nur in horizontaler Richtung erstreckende Federanordnung (1) mit ihrem Zentralbereich (16) fest mit dem die Unwuchtinformation weitergebenden Teil, Dynamometer, (5) des Lagerständers verbunden ist und die in Richtung der Querebene parallel zu dieser nach links und rechts in horizontaler Richtung weisenden, einen Winkel zwischen sich einschließenden und je Seite an ihrem äußeren Ende (17) verbundenen, mindestens zwei symmetrisch zur Lagerquerachse (Y) angeordneten Speichen (18) mit der Platte (7) für das Lager (13 bzw. 24) fest verbunden sind und daß der Führungsstab (3) für jede Kegelrolle (2) am äußeren Ende (17) der Speichen (18) angreifend in Richtung der Querachse (Y) des Lagers (13 bzw. 24) weist und an seinem äußeren Ende je Seite mit der Kegelrolle (2) drehbar verbunden ist.

7. Federnde Abstützung nach Anspruch 6, dadurch gekennzeichnet, daß Führungsstab (3) und Kegel (2) einstückig ausgebildet sind.

8. Federnde Abstützung nach Anspruch 6 oder Anspruch 7, dadurch gekennzeichnet, daß die Speichen (18) eine kleinere Dicke als der Zentralbereich (16) und die äußeren Enden (17) besitzen.

9. Federnde Abstützung nach Anspruch 8, dadurch gekennzeichnet, daß die Speichen (18) zusätzlich eingeschnürt sind.

10. Federnde Abstützung nach einem oder mehreren der vorhergehenden Ansprüche 4 bis 9, dadurch gekennzeichnet, daß die Platte (7) Schürzen (4) trägt.

11. Federnde Abstützung nach einem oder mehreren der vorhergehenden Ansprüche 4 bis 10, dadurch gekennzeichnet, daß das Lager (13 bzw. 24) mit der Platte (7) verschweißt ist.

12. Federnde Abstützung nach einem oder mehreren der Ansprüche 1 bis 11, dadurch gekennzeichnet, daß die Federanordnung (1) einstückig ausgebildet ist.

13. Federnde Abstützung nach einem oder mehreren der vorhergehenden Ansprüche 4 bis 12, dadurch gekennzeichnet, daß Platte (7), Federanordnung (1) und Dynamometer (5) einstückig ausgebildet sind.

14. Federnde Abstützung nach Anspruch 2, dadurch gekennzeichnet, daß das Lager (13) auf einer steifen Platte (7) angeordnet ist und daß am Dynamometer (5) und an der Platte (7) ein ein hydrostatisches Lager bildendes Plattenpaar (31, 32) vorgesehen ist, daß eine dieser Platten eine Zuführbohrung besitzt, daß die Zuführbohrung mit der Druckseite einer Druckerhöhungspumpe (35) über eine Zuleitung (36) verbunden ist, und daß eine Rückleitung (37) den ablaufenden Fluidfilm (33) der Saugseite der Druckerhöhungspumpe (35) wieder zuführt.

**Claims**

1. Sprung support of a bearing on one part of a bearing pillar, for rotor to be examined in a balancing machine for unbalance, which transfers the data on unbalance to a vibration transformer, the shaft extension axis of which part is not aligned with the axis of rotation of the rotor, characterised in that a spring arrangement (1) allowing rotation around the normal axis (Z) and the transverse axis (Y) of the bearing is arranged between the bearing (13) for the shaft extension (25) and the part of the bearing pillar transmitting the data concerning unbalance, dynamometer, (5), for damping extraneous vibrations originating from the shaft extension (25), that two support elements (2 or 30) are arranged transversely between the bearing (13) for the shaft extension (25) and the part of the bearing transmitting the data concerning unbalance, in order to transfer the weight of rotor and bearing to the bearing pillar.

2. Sprung support according to claim 1, characterised in that hydrostatic bearings form the support elements.

3. Sprung support according to claim 1, characterised in that tapered rollers (2), arranged between tapered facing surfaces (14, 15) that are arranged transversely are used as support elements, and that the tapered rollers (2) are connected via guide rods (3) to the spring arrangement (1), and that the tips of the tapered part of the tapered rollers (2) and of the tapered supports (14, 15) intersect in the extension of the vertical axis (Z) of the bearing.

4. Sprung support according to claim 1 and/or 3, characterised in that the bearing (13) is arranged on a rigid plate (7) and that the spring arrangement (1) allowing rotation is, on the one hand, connected to this plate (7), and on the other hand, connected to the part of the support pillar (10) transmitting data on unbalance, dynamometer, (5), and that the tapered rollers (2) are arranged between the tapered supports (14, 15) at the plate (7) and at the bearing pillar (10).

5. Sprung support according to one or more of claims 1, 3 and 4, characterised in that the two tapered rollers (2) extend along the central vertical plane of the bearing (Y), with their axes running in a horizontal direction.

6. Sprung support according to one or more of claims 1, 3, 4 and 5, characterised in that the central region (16) of the spring arrangement (1) which extends substantially only in a horizontal direction is firmly attached to the component transmitting the data on unbalance, dynamometer, (5) of the bearing pillar, and the spokes (18), of which there are at least two, arranged symmetrically about the transverse axis of the bearing (Y), running in the direction of the transverse plane and parallel to it, pointing left and right in a horizontal direction, and enclosing an angle between them and of which each side is attached at the outer end, are firmly attached to the plate (7) for the bearing (13, or 24), and that the guide rod (3) for each tapered roller (2) at the outer end (17) of the spokes (18) points in the direction of and acts upon the transverse axis (Y) of the bearing (13, or 24) and is rotatably connected at the outer end of each side to the tapered roller (2).

7. Sprung support according to claim 6, characterised in that the guide rod (3) and tapered roller (2) are embodied in one piece.

8. Sprung support according to claim 6 or claim 7, characterised in that the spokes (18) are of smaller thickness than the central region (16) and the outer ends (17).

9. Sprung support according to claim 8, characterised in that the spokes (18) are additionally constricted.

10. Sprung support according to one or more of the foregoing claims 4 to 9 characterised in that the plate (7) has guard plates (4).

11. Sprung support according to one or more of the foregoing claims 4 to 10, characterised in that the bearing (13 or 24) is welded to the plate (7).

12. Sprung support according to one or more of claims 1 to 11, characterised in that the spring arrangement (1) is embodied in one piece.

13. Sprung support according to one or more of the foregoing claims 4 to 12, characterised in that the plate (7), spring arrangement (1) and dynamometer (5) are embodied in one piece.

14. Sprung support according to claim 2, characterised in that the bearing (13) is arranged on a rigid plate (7), and that a pair of plates (31, 32) forming a hydrostatic bearing is arranged at the dynamometer (5) and at the plate (7), that one of these plates has a feed bore, that the feed bore is connected to the delivery side of a booster pump (35) via a supply pipe (36), and that a return pipe (37) conveys the fluid film (33) back to the inlet side of the booster pump (35).

**Revendications**

1. Suspension élastique d'un palier sur une partie d'un support de palier transmettant les informations de défauts d'équilibrage à un convertisseur de vibrations, pour un rotor dont les défauts d'équilibrage doivent être examinés sur une machine d'équilibrage, dont l'axe du tourillon de l'arbre n'est pas aligné avec l'axe de rotation du rotor, caractérisée en ce qu'un dispositif élastique (1) permettant une rotation autour de l'axe vertical (Z) et de l'axe transversal (Y) du palier (10) est placée entre le palier (13) pour le tourillon d'arbre (25) et la partie du support de palier, dynamomètre, (5) transmettant les informations de défaut d'équilibrage, pour inhiber des vibrations étrangères provenant du tourillon d'arbre (25), en ce que deux éléments d'appui (2 et respectivement 30) sont disposés entre le palier (13) pour le tourillon d'arbre (25) et la partie du support de palier, dynamomètre, (5) transmettant les informations de défaut d'équilibrage, en direction transversale, pour transférer le poids du rotor et du palier au support de palier (10).

2. Suspension élastique selon la revendication 1, caractérisée en ce que des appuis hydrostatiques (30) constituent les éléments d'appui.

3. Suspension élastique selon la revendication 1, caractérisée en ce qu'on utilise, comme élément d'appui, des rouleaux coniques (2) qui sont placé entre des contre-surfaces coniques (14, 15) disposées en direction transversale, et en ce que les rouleaux coniques (2) sont reliés par des barres de guidage (3) au dispositif élastique (1), et en ce que les sommets du cône des rouleaux coniques (2) et des appuis coniques (14, 15) se coupent sur le prolongement de l'axe vertical (2) du palier.

4. Suspension élastique selon la revendication 1 et/ou 3, caractérisée en ce que le palier (13) est placé sur une plaque (7) rigide, en ce que le dispositif élastique (1) permettant une rotation est relié d'une part à cette plaque (7), et d'autre part, à la partie transmettant les informations de défaut d'équilibrage, dynamomètre, (5) du support de palier (10), et en ce que les rouleaux coniques (2) sont placés entre les appuis coniques (14, 15) sur la plaque (7) et sur le support de palier (10).

5. Suspension élastique selon une ou plusieurs des revendications 1, 3 et 4, caractérisée en ce que les deux rouleaux coniques (2) s'étendent dans le plan de symétrie vertical (Y) du palier et s'étendent par leur axe en direction horizontale.

6. Suspension élastique selon une ou plusieurs des revendications 1, 3, 4 et 5, caractérisée en ce que le dispositif élastique (1) s'étendant pratiquement seulement en direction horizontale est relié rigidement, par sa zone centrale (16), à la partie transmettent les informations de défaut d'équilibrage, dynamomètre, (5) du support de palier et les rayons (18) dirigés dans la direction du plan transversal parallèlement à celui-ci vers la gauche et vers la droite en direction horizontale, faisant un angle entre eux et reliés de chaque côté à leur extrémité extérieure (17), au moins au nombre de deux, disposés symétriquement par rapport l'axe transversal (Y) du palier, sont reliés rigidement à la plaque (7) pour le palier (13, respectivement 24), et en ce que la barre de guidage (3) pour chaque rouleau conique (2) est dirigée, en étant appliquée à l'extrémité extérieure (17) des rayons (18), dans la direction de l'axe transversal (Y) du palier (13, respectivement 24), et est relié de façon à pouvoir tourner à son extrémité extérieure de chaque côté au rouleau conique (2).

7. Suspension élastique selon la revendication 6, caractérisée en ce que la barre de guidage (3) et le cone (2) sont réalisés d'un seul tenant.

8. Suspension élastique selon le revendication 6 ou 7, caractérisée en ce que les rayons (18) ont une plus faible épaisseur que la zone centrale (16) et les extrémités extérieures (17).

9. Suspension élastique selon la revendication 8, caractérisée en ce que les rayons (18) comportent en plus des rétrécissements.

10. Suspension élastique selon une ou plusieurs des revendications 4 à 9 qui précèdent, caractérisée en ce que la plaque (7) comporte des tabliers (4).

11. Suspension élastique selon une ou plusieurs des revendications 4 à 10 qui précèdent, caractérisée en ce que le palier (13 ou 24) est soudé à la plaque (7).

12. Suspension élastique selon une ou plusieurs des revendications 1 à 11, caractérisée en ce que le dispositif élastique (1) est réalisé d'un seul tenant.

13. Suspension élastique selon une plusieurs des revendications 4 à 12 qui précèdent, caractérisée en ce que la plaque (7), le dispositif élastique (1) et le dynamomètre (5) sont réalisés d'un seul tenant.

14. Suspension élastique selon la revendication 2, caractérisée en ce que le palier (13) est placé sur une plaque rigide (7), et en ce qu'on prévoit sur le dynamomètre (5) et sur la plaque (7) une paire de plaques (31, 32) constituant un palier hydrostatique, en ce que l'une des ces plaques comporte un conduit d'amenée, en ce que le conduit d'amenée est relié au côté de refoulement d'une pompe d'élévation de pression (35) par l'intermédiaire d'une conduite d'amenée (36), et en ce qu'une conduite de retour (37) ramène la pellicule de fluide (33) sortante du côté d'aspiration de la pompe d'élévation de pression (35).

# Fig. 1

# Fig. 2

# Fig 3

17 28 18 28 16 1 18 28 17

# Fig 3a

7 18 28 16 28 3 15

27

15 14 2 3 17 28 5 28 18 17 14 2

# Fig. 4